# EUROPEAN PATENT APPLICATION

(11) **EP 2 023 037 A1**
(43) Date of publication of application: **11.02.2009**
(21) Application number: 08160656.8
(22) Date of filing: 17.07.2008
(51) Int. Cl.: F21S 9/03, F21S 11/00

(54) **Lighting system**

(30) Priority: 08.08.2007 NL 1034237
(71) Applicant: Etap N.V., 2390 Malle (BE)
(72) Inventor: Verbeeck, Ronald Ivo Maria, 2275 Lille (BE); Taeymans, Franciscus Alphonsus Maria, 2340 Beerse (BE)
(74) Representative: Hatzmann, Martin

(57) **Abstract**

The invention relates to a lighting system (1), comprising a lighting fixture (9). Furthermore, the system comprises a LED light source (10) which is arranged in the lighting fixture (9). In addition, the system comprises a solar cell (12) which is disposed at a position well accessible to daylight, the solar cell (12) being connected directly to the LED light source (10) for directly supplying the LED light source (10) with electrical current generated by the solar cell (12).

## Description

The invention relates to a lighting system, comprising a lighting fixture, further comprising a LED light source which is arranged in the lighting fixture.

Such lighting systems are known and are employed for lighting spaces which are not lit, or insufficiently so, by daylight, such as zones of a room that are located remote from windows, or filing rooms. However, switched-on lighting consumes energy. Moreover, persons present in such spaces may feel they have lost contact with the outside world.

To illuminate such low-daylight spaces in an energetically acceptable manner, so-called daylight systems are known whereby daylight is guided to the spaces referred to with optical aids. Thus, also intuitive contact with the outside world may at least partly be restored.

A known daylight system comprises optical aids which are disposed near or in windows, such as lamellae with mirroring elements or prisms. In this way, daylight can penetrate deeper into a room. Furthermore, daylight systems are known whereby daylight is captured with receptors equipped for that purpose, for instance with positioning systems to determine the orientation depending on the position of the sun, also named heliostats, and, via a transport system with light guides, also named heliostats, is guided to the dark spaces.

However, the use of such daylight systems meets with objections in practice. For instance, the daylight system may affect the facade's architecture considerably, especially when on the outside of the window external aids such as lamellae are disposed. Externally disposed installations are moreover susceptible to weather influences, such as precipitation and wind. This plays a role in particular in case of high-rise buildings. Also, maintenance of the inside or outside of the facade may be rendered more difficult by the daylight system. The position and/or orientation of daylight openings that are available for the daylight systems depends on the architecture of a building and hence is not always suitable for an optimum functioning of the daylight systems. Furthermore, the use of refractive or diffusing materials hinders the free view from the rooms, for instance because of greatly interfering reflections. In addition, a user of the known daylight system may be irritated by the noise attendant on the use of various mechanical control mechanisms, for instance for setting lamellae depending on the position of the sun. Also, the automatic character of such daylight systems may create a sense of irritation and uncontrollability with the user. What is more, the optical aids may induce irritating optical effects both inside the room and outside the building, for instance in case of lamellae following the position of the sun.

Known daylight systems usually depend on the type of daylight. For instance, some daylight systems have a desired effect in case of diffuse daylight, other systems, by contrast, in case of directed sunlight. In addition, light guiding systems have a negative impact on requirements regarding fire safety and (acoustic) insulation. Also, the transmitted light is bundled, so that insufficiently lighted zones are still involved. Moreover, the temperature can locally run up significantly. Overall, known daylight systems are normally costly, complex, fragile, voluminous, visually unattractive and only effective for transmitting daylight over relatively short distances.

The invention contemplates a lighting system of the type mentioned in the opening paragraph hereof, whereby, while the advantages are maintained, the above-mentioned disadvantages are avoided. In particular, the invention contemplates obtaining an energetically attractive lighting system. To that end, the system furthermore comprises a solar cell which is disposed at a position well accessible to daylight while the solar cell is connected directly to the LED light source for directly supplying the LED light source with electrical current generated by the solar cell.

By supplying the LED directly with electrical current generated by a solar cell disposed at a position well accessible to daylight, a simple system has been obtained for, with the aid of daylight, generating light in a space which is less accessible or wholly inaccessible to daylight. By the use of a solar cell, a strong energetic advantage is obtained. This is because the position and orientation of the solar cell, also named photocell or solar panel, can in principle be chosen independently of the zone to be lighted, so that the system can be easily implemented. Thus a lighting system has been obtained whereby daylight is converted in an indirect manner into light which illuminates a zone inaccessible to daylight or less accessible to daylight.

The direct supply of the LED using electrical current generated by the solar cell moreover yields an extra energetic advantage, since an efficiency-reducing DC/AC converter at the solar cell and a likewise efficiency-reducing LED driver are thus redundant. As a result, energetic losses between the electrical energy generated by the solar cell and the LED are minimal. This can yield a considerable saving of cost during use because less energy from a regular electricity grid is needed for lighting the zone mentioned. Nor does the system generate any high-frequency interferences. Moreover, by the use of fewer electrical components a relatively cheap, robust and durable apparatus is obtained. In addition, an esthetically attractive solution has been obtained, since the solar cell can be disposed at less visible locations. Any impact on the architecture of a building in which the lighting system is set up is hence very slight or absent altogether. Also, the lighting system comprises hardly any moving mechanical parts, if any at all, so that, practically speaking, there is no nuisance of noise nor wear involved, while the useful life is relatively long and cost of maintenance is low. Furthermore, the electrical connection between the photocell and the lighting fixture can be made relatively long, so that the fixture of the system according to the invention can also be installed in spaces located remote from ambient light. Advantageously, in principle, aspects such as fire safety and insulation are not impeded by the provision of the system according to the invention. Furthermore, windows can remain free of optical means of daylight systems and hence continue to fulfill primary functions such as unhindered view optimally. Sun protection on the window side can be controlled independently of the lighting system according to the invention, for instance by a user or via automatic control. Since the available energy for lighting dark zones in a building depends only on the energy generated by the photocell, the system is in principle independent of the setting of any sun protection. The photocell used generates an electrical current which, in principle, is independent of the type of outside light, but depends on the irradiated power.

In an advantageous embodiment according to the invention, the character of the light exiting from the lighting fixture depends on the magnitude of electrical current generated by the solar cell, supplied to the LED light source. In this way, a user of the system can still experience indirectly a sensation of the daylight in the space not accessible to daylight or less accessible to daylight. Thus, the intensity and/or the light color of the light exiting from the lighting fixture may vary depending on the magnitude of the supplied electrical current, which increases according as the intensity of the daylight incident on the solar cell augments. In principle, the lighting system according to the invention may also be arranged such that the character of the light exiting from the lighting fixture does not depend on the magnitude of the electrical current supplied to the LED light source, for instance if it is desired to light the space with a constant amount of light. To that end, for instance electrical current from the regular electricity grid can be utilized.

Further advantageous embodiments of the invention are represented in the subclaims.

The invention will be further elucidated on the basis of exemplary embodiments which are represented in the drawing. In the drawing:
Figure 1 shows a schematic elevation of a first embodiment of a lighting system according to the invention;
Figure 2 shows a schematic elevation of a second embodiment of a lighting system according to the invention; and
Figure 3 shows a schematic elevation of a third embodiment of a lighting system according to the invention.

The figures are only schematic representations of preferred embodiments of the invention. In the figures, equal or corresponding parts are indicated with corresponding reference numerals.

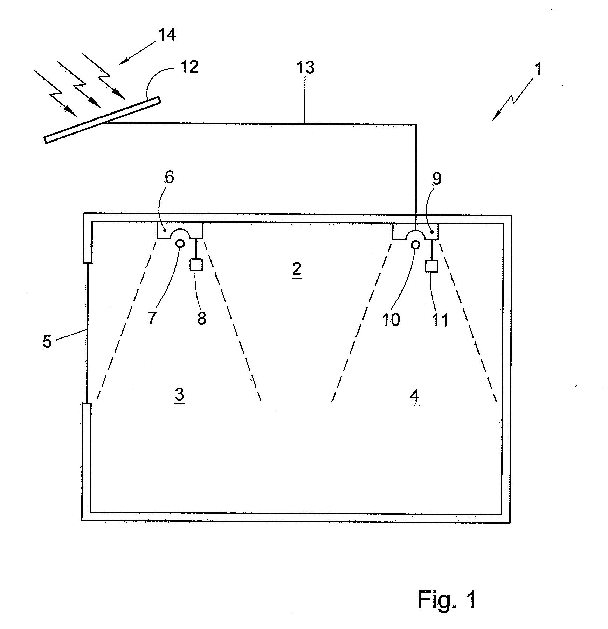

Figure 1 shows a schematic elevation of a first embodiment of a lighting system 1 according to the invention. The lighting system 1 is partly arranged in a room 2 of a building. The room 2 has a window zone 3 and an inner zone 4. The window zone 3 is near a window 5 and so is relatively well accessible to daylight. The inner zone 4 of the room 2 is remote from the window 5, for instance farther than about 3 meters, and is less accessible to daylight. The lighting system 1 has a lighting fixture 9 which is disposed in the inner zone 4 for the lighting thereof. In the lighting fixture 9, a LED light source 10 is arranged.

Furthermore, the lighting system 1 comprises a solar cell 12, also named solar panel, which is set up at a position well accessible to daylight. Depending on an amount of incident daylight 14, the solar panel generates an amount of electrical current. Through an electrical connection 13, the solar panel 12 is connected directly to the LED light source 10. Thus the LED light source generates an amount of light in the inner zone 4 where natural light is scarce, while the generated amount of light is related to the amount of daylight incident on the solar panel 12.

The solar panel 12 may be set up outside, for instance on the roof of the building, so that it is not visible, or hardly visible, and yet well accessible to daylight. In principle, the panel 12 may also be set up elsewhere, for instance on the facade or in the window 5. Preferably, the orientation of the solar panel 12 is such that an optimum amount of radiation can be captured.

With incident daylight, the solar panel 12 generates an electrical current which without interposition of a DC/AC converter and a driver at the LED is supplied directly to the LED light source 10. Since the light yield of the LED light source 10 is directly related to the magnitude of the supply current presented, normally substantially proportional to the supply current, the amount of light that is generated in the inner zone 4 of the room 2 is also directly related to the amount of daylight. Furthermore, this involves a saving on electrical components, such as control electronics, converters and batteries.

LED light sources are compact and hence easy to integrate into existing lighting fixtures. Moreover, the useful life of a LED light source is relatively long and LED light sources are being developed further and further, so that efficiency is expected to increase, thus yielding a favorable cost-saving effect.

It is noted that instead of a single solar panel a plurality of solar panels may be deployed for generating electrical currents. Also, more than one LED light source may be supplied with the at least one solar panel.

The embodiment of the lighting system 1 shown furthermore comprises a sensor system 11 for measuring light in the zone 4 in which the lighting fixture 9 is disposed. In this way, depending on the amount of measured light in the inner zone 4, a supplementary light source, supplied by an electrical supply source such as the regular electricity grid, can be switched on to light the inner zone 4 still more, in supplementation of the light that is generated by the LED light source 10. The supplementary light source can for instance comprise a gas discharge lamp or a LED. The supplementary light source can be accommodated in a separate lighting fixture or in the lighting fixture 9 of the lighting system. Since a LED light source is relatively compact, the lighting fixtures of the LED light source 10 and the one or more supplementary light sources may advantageously be integrated into a single lighting fixture 9.

It is noted that the lighting system 1, of course, can also be designed without sensor system 1, for instance if no supplementary light sources are present or if no saving of energy is contemplated, but solely the creation of light dynamics as a function of the varying daylight. The lighting fixture 9 that is coupled to the solar cell 12 is then free of a connection with the regular electricity grid, which augments the simplicity of the system and saves energy.

According to the invention, the character of the light exiting from the lighting fixture 9 depends on the magnitude of electrical current generated by the solar cell 12, supplied to the LED light source 10. This is because the amount of current through the LED light source 10 depends on the supply current. Furthermore, the supply current-dependent character of the LED light source 10 may also be set differently, for instance by varying the light color depending on the magnitude of the supply current. Thus, for instance, the mixing ratio of a warm and cold light color may be adjusted depending on the magnitude of the supply current. The light yield of one or more extra LED light sources with mutually different color spectra, such as one or more blue LEDs, can be set. Also, the mixing ratio of a warm color coming from a gas discharge lamp and a cold color from a LED light source can be adjusted. By thus adjusting the character of the generated light in the inner zone 4 of the room 2, a user present in the inner zone 4 can experience a sense of being in contact with the daylight in the outside world, which can have a favorable effect on the biorhythm.

Furthermore, in the room 2 a second lighting fixture 6 is arranged, viz. for lighting the window zone 3. The second lighting fixture 6 is for instance provided with a dimmable gas discharge lamp 7 and a sensor for measuring the amount of light in the window zone 3 for controlling/dimming the gas discharge lamp 7 depending on the amount of measured light. The gas discharge lamp 7 can for instance be chosen to be of the same type as that in the lighting fixture of the lighting system according to the invention. Furthermore, it is possible not to install a second lighting fixture 6 in the room 2, for instance because normally sufficient light is present in the window zone 3.

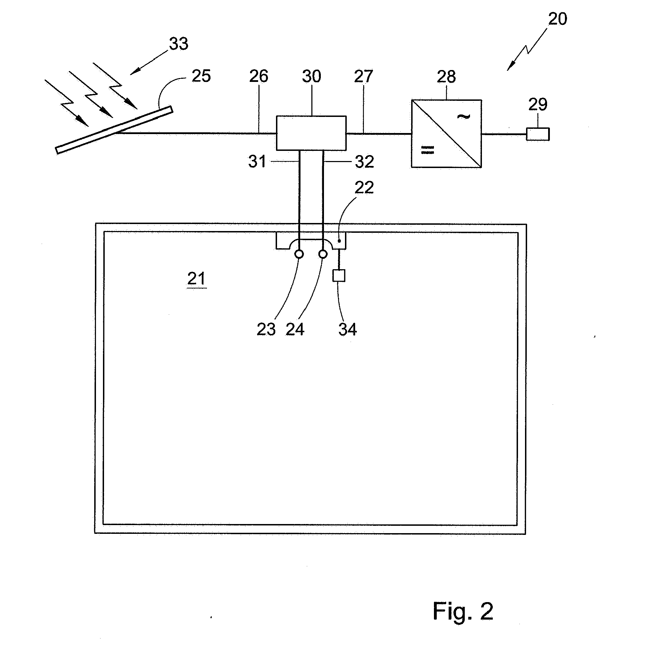

Figure 2 shows a schematic elevation of a second embodiment of a lighting system 20 according to the invention. The lighting system 20 comprises a lighting fixture 22 which is placed in a space 21 practically inaccessible to daylight, such as a filing room or a corridor in a building.

The lighting fixture 22 has two LED light sources 23, 24 for lighting the space 21 lacking natural light. In principle, the fixture 22 can also have more LED light sources, such as three, four, ten or more LED light sources, or only one LED light source. Furthermore, the fixture 22 is provided with a sensor 34 for measuring light in the space 21. The light sources 23, 24 are supplied via electrical connections 31, 32, which are connected to a controller 30. The controller 30 is furthermore connected, via other electrical connections 26, 27, respectively, to a solar panel 25 as described above and by means of an AC/DC converter 28 to the regular electricity grid 29. The solar panel 25 is arranged for generating an electrical current from incident daylight 33. The controller 30 controls the magnitude of the electrical current that is passed from the regular electricity grid 29 to the LED light sources 23, 24, depending on the measured amount of light in the space 21 in which the lighting fixture 22 is arranged. Thus, a predetermined amount of light can be generated, independently of the magnitude of the electrical current generated by the solar panel 25, while yet an energetically attractive system is obtained. In an alternative embodiment, the system 20 comprises a sensor system for measuring electrical current generated by the solar cell 25, passed to the LED light sources 23, 24. The controller 30 is then configured to control the magnitude of the electrical current that is passed from the regular electricity grid 29 to the LED light sources 23, 24, depending on the magnitude of the electrical current generated by the solar cell 25, supplied to the LED light sources 23, 24 and/or depending on light present in the space 21 in which the fixture 22 is disposed. Optionally, the sensor 34 for measuring light that is present in the space 21 can be saved.

As in the first embodiment, the character of the light exiting from the lighting fixture 22 can be set depending on electrical current supplied by the solar cell 25 and/or measured light in the space 21.

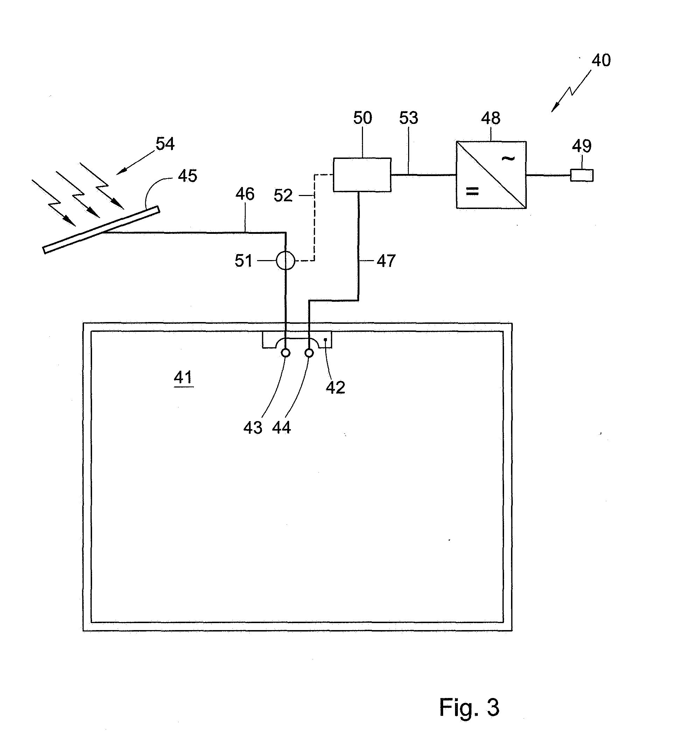

Figure 3 shows a schematic elevation of a third embodiment of a lighting system 40 according to the invention. The lighting system 40 also comprises a lighting fixture 42 which is disposed in a space 41 practically inaccessible to daylight, such as a filing room or a corridor in a building. The lighting fixture 42 is provided with a LED light source 43 and a supplementary light source 44. The supplementary light source 44 may also be designed as a LED light source, or as a gas discharge lamp, such as an HID lamp. Other types of light sources, of course, are also possible, for instance an incandescent lamp.

Via an electrical connection 46, the LED light source 43 is connected directly to a solar panel 45 which serves to convert incident daylight 54 into an electrical current. The supplementary light source 44 is connected via an electrical connection 47, a controller 50, a supplementary electrical connection 53 and an AC/DC converter 48, to the regular electricity grid 49. Furthermore, the system 40 comprises a sensor system 51 for measuring electrical current generated by the solar panel 45, passed to the LED light source 43. The sensor system 51 is connected via a connection 52 to the controller 50. The controller 50 controls the light intensity of the supplementary light source 44 by setting the supply from the regular electricity grid 49 depending on the measured current intensity with which the solar panel 45 supplies the LED light source 43. In this way, a predetermined light level can be achieved in the space 41. Of course, the supply from the regular electricity grid 49 can also be set depending on an amount of light in the space 41 measured by means of a sensor, or depending on both a measured amount of light in the space 41 and a measured current intensity of the solar panel 45.

It is noted that instead of a single supplementary light source 44, a plurality of supplementary light sources may be used.

Furthermore, it is noted that the solar cell in the embodiments as shown in Figures 1, 2 and 3 does not provide electrical energy to the regular electricity grid. The solar cell solely provides electrical energy that is supplied directly to a LED light source and is there converted into light. In this way, no complex control means are required that counteract instability of the electricity grid in controlling a local energy supply to the regular grid.

In an advantageous embodiment according to the invention, the lighting fixture comprises an emergency lighting unit. Thus, the emergency lighting unit which is for instance designed with pictograms can for a large part be provided with inexpensively obtained electrical energy.

In another embodiment according to the invention, the lighting fixture is disposed in a tunnel, preferably in an entrance and/or exit zone of the tunnel, so that traffic that uses the tunnel, such as pedestrians, cyclists and motor traffic such as mopeds, motorcycles, cars and trains, can be lighted in an energetically attractive manner. By providing the entrance and/or exit zone of the tunnel with a lighting fixture according to the invention, the entrance and/or exit zone may be lighted more when daylight is relatively intense, so that traffic can elegantly get used to the transition between the light intensity inside and outside the tunnel. The preferably higher lighting intensity in the tunnel, in particular in the entrance and/or exit zone of the tunnel when daylight levels outside are high, may thus be realized possibly completely and in a dynamic manner with energy coming from daylight.

It is noted that the space/zone/room in which the lighting fixture of the lighting system according to the invention is arranged can be part of a building or a part thereof, but may also be part of other structures such as underground mine passageways.

The invention is not limited to the exemplary embodiments described here. Many variants are possible.

For instance, the supply from the regular electricity grid can be supplemented or replaced with a supply from batteries.

Furthermore, the energy generated by the solar panel may further be utilized for supplying electrical installations such as climate control systems.

In addition, optionally, the direct supply of the LED light source by the solar cell may be interrupted, for instance if the space in which the LED light source is disposed is temporarily out of use, as during a vacation period. In a specific embodiment according to the invention, the electrical energy generated by the solar cell may be supplied to the regular electricity grid when the direct supply of the LED light source is interrupted, so that the available energy is usefully utilized. In this specific embodiment too, the LED light source is supplied directly by the solar cell when the interruption is removed again, so that an efficiency-reducing conversion via the regular electricity grid is avoided.

Also, a construction with a controller as described in conjunction with Figure 2 can be used in a space where also other light sources are available such as artificial light sources or daylight. Similarly, a construction with a controller as described in conjunction with Figure 3 can be used in a space where also other light sources are present.

Such variants will be clear to those skilled in the art and are understood to fall within the scope of the invention as set forth in the following claims.

## Claims

1. A lighting system, comprising a lighting fixture, furthermore comprising a LED light source which is arranged in the lighting fixture, wherein the system furthermore comprises a solar cell which is disposed at a position well accessible to daylight and wherein the solar cell is connected directly to the LED light source for directly supplying the LED light source with electrical current generated by the solar cell.

2. A lighting system according to any one of the preceding claims, wherein the character of the light exiting from the lighting fixture depends on the magnitude of electrical current generated by the solar cell, supplied to the LED light source.

3. A lighting system according to claim 1 or 2, wherein the zone in which the lighting fixture is disposed is an inner zone of a room, located remote from windows.

4. A lighting system according to claim 1 or 2, wherein the zone in which the lighting fixture is disposed is a space practically inaccessible to daylight.

5. A lighting system according to any one of claims 1-4, furthermore comprising a supplementary light source which is included in the lighting fixture.

6. A lighting system according to claim 5, wherein the supplementary light source is a LED light source or a gas discharge lamp.

7. A lighting system according to any one of the preceding claims 5 or 6, furthermore comprising a controller for controlling the light intensity of the supplementary light source by setting the supply from the regular electricity grid, depending on the magnitude of electrical current generated by the solar cell, supplied to the LED light source and/or depending on light present in the zone in which the lighting fixture is disposed.

8. A lighting system according to any one of the preceding claims, wherein the LED light source which is connected to the solar cell is further connected to the regular electricity grid and wherein the system furthermore comprises a controller for controlling the magnitude of the electrical current which is passed from the regular electricity grid to the LED source, depending on the magnitude of electrical current generated by the solar cell, supplied to the LED light source and/or depending on light present in the zone in which the lighting fixture is disposed.

9. A lighting system according to any one of the preceding claims, furthermore comprising a sensor system for measuring electrical current generated by the solar cell, passed to the LED light source and/or for measuring light in the zone in which the lighting fixture is disposed.

10. A lighting system according to any one of the preceding claims, wherein the lighting fixture is disposed in a zone inaccessible to daylight or less accessible to daylight.

11. A lighting system according to any one of the preceding claims, wherein the lighting fixture comprises an emergency lighting unit.

12. A lighting system according to any one of the preceding claims, wherein the lighting fixture is disposed in a tunnel, preferably in an entrance and/or exit zone of the tunnel.
